# EUROPEAN PATENT APPLICATION

(11) **EP 4 722 549 A1**
(43) Date of publication of application: **08.04.2026**
(21) Application number: 25202295.9
(22) Date of filing: 15.09.2025
(51) Int. Cl.: F16C 17/02, F01D 25/16, F01D 25/22, F16C 27/02, F16C 33/74, F16C 35/02, F16C 27/06

(54) **VIBRATION DAMPENING ASSEMBLY FOR BEARING SYSTEMS**

(30) Priority: 07.10.2024 US 202418907736
(71) Applicant: Hamilton Sundstrand Corporation, Charlotte, NC 28217-4578 (US)
(72) Inventor: SCHUSTER, Zachary Alex, Chicago, IL (US); BEERS, Craig M., Wethersfield, 06109 (US); COLSON, Paul M., Westfield, MA, 01085 (US)
(74) Representative: Dehns

(57) **Abstract**

A seal system for controlling dampening in a journal bearing system. The seal system includes a plurality of seals that include a first seal (24) and a second seal (26). The first seal (24) is operable to provide a first range of dampening compliance under a first range of journal bearing operating conditions. The second seal (26) is operable to provide a second range of dampening compliance under a second range of journal bearing operating conditions. The first range of dampening compliance is different from the second range of dampening compliance.

## Description

### BACKGROUND

Exemplary embodiments pertain to the art of journal air bearings (hydrodynamic fluid film journal bearing or foil bearing) and, more specifically, to vibration dampening assemblies operable to provide improved control of vibration dampening in bearing systems.

Conventional aircraft environmental control systems incorporate an air cycle machine, also referred to as an air cycle cooling machine, for cooling and dehumidifying air supplied to the aircraft cabin. Environmental control systems also utilize other turbomachinery including motor driven compressors and fans, and for simplicity, all forms of turbomachinery are referred as air cycle machines in this disclosure. Air cycle machines commonly include at least two turbines and a compressor spaced axially at intervals on a common shaft. The turbines and compressor are supported for rotation about the axis of the shaft by one or more bearing assemblies. So-called vibration dampening assemblies include seal elements that can be used to control or dampen vibrations of the bearing assemblies. However, seal elements are exposed to a variety of air cycle machine operating conditions (e.g., force loads and extreme operating temperatures) that can invoke failure modes of the seal elements, including, for example, the seal elements experiencing permanent setting and loss of squeeze, which can result in bearing failure. It is thus desirable to provide a vibration dampening assembly with seal elements operable to provide improved control of vibration dampening in bearing systems across a variety of environmental operating conditions.

### BRIEF DESCRIPTION

Disclosed is a seal system for controlling dampening in a journal bearing system. The seal system includes a plurality of seals that include a first seal and a second seal. The first seal is operable to provide a first range of dampening compliance under a first range of journal bearing operating conditions. The second seal is operable to provide a second range of dampening compliance under a second range of journal bearing operating conditions. The first range of dampening compliance is different from the second range of dampening compliance.

In addition to any one or more of the features described herein, the first range of journal bearing operating conditions is different from the second range of journal bearing operating conditions.

In addition to any one or more of the features described herein, the first seal includes a first seal shape.

In addition to any one or more of the features described herein, the first seal shape is operable to contribute to providing the first range of vibration dampening compliance under the first range of journal bearing operating conditions.

In addition to any one or more of the features described herein, the first seal includes a first seal material.

In addition to any one or more of the features described herein, the first seal material is operable to contribute to providing the first range of vibration dampening compliance under the first range of journal bearing operating conditions.

In addition to any one or more of the features described herein, the second seal includes a second seal shape.

In addition to any one or more of the features described herein, the second seal shape is operable to contribute to providing the second range of vibration dampening compliance under the second range of journal bearing operating conditions.

In addition to any one or more of the features described herein, the second seal includes a second seal material, and the second seal material is different from the first seal material.

In addition to any one or more of the features described herein, the second seal material is operable to contribute to providing the second range of vibration dampening compliance under the second range of journal bearing operating conditions.

In addition to any one or more of the features described herein, the first seal shape is selected from a group consisting of a circular shape, a square shape, a rectangular shape, a hexagonal shape, an O-ring shape, and an hourglass shape.

In addition to any one or more of the features described herein, the second seal shape is selected from a group consisting of a circular shape, a square shape, a rectangular shape, a hexagonal shape, an O-ring shape, and an hourglass shape.

In addition to any one or more of the features described herein, the plurality of seals further includes a third seal. The third seal is operable to provide a third range of vibration dampening compliance under a third range of journal bearing operating conditions. The third range of vibration dampening compliance is different from the first range of vibration dampening compliance. The third range of vibration dampening compliance is different from the second range of vibration dampening compliance. The third range of journal bearing operating conditions is different from the first range of journal bearing operating conditions. The third range of journal bearing operating conditions is different from the second range of journal bearing operating conditions. The third seal includes a third seal shape. The third seal shape is operable to contribute to providing the third range of vibration dampening compliance under the third range of journal bearing operating conditions. The third seal includes a third seal material. The third seal material is operable to contribute to providing the third range of vibration dampening compliance under the third range of journal bearing operating conditions. The third seal shape is different from the first seal shape. The third seal shape is different from the second seal shape. The third seal material is different from the first seal material. The third seal material is different from the second seal material. The third seal shape is selected from a group consisting of a circular shape, a square shape, a rectangular shape, a hexagonal shape, an O-ring shape, and an hourglass shape.

Further disclosed is a seal system for controlling vibration dampening in a journal bearing system. The system includes a plurality of seals including a first seal and a second seal. The first seal and the second seal are between a first component and a second component of the journal bearing system. The first seal is operable to provide a first range of vibration dampening compliance under a first range of journal bearing operating conditions. The second seal is operable to provide a second range of vibration dampening compliance under a second range of journal bearing operating conditions. The first range of vibration dampening compliance is different from the second range of vibration dampening compliance.

In addition to any one or more of the features described herein, the first range of journal bearing operating conditions is different from the second range of journal bearing operating conditions.

In addition to any one or more of the features described herein, the first component includes a housing of the journal bearing system, and the second component includes a journal bearing of the journal bearing system.

In addition to any one or more of the features described herein, the first seal includes a first seal shape. The first seal shape is operable to contribute to providing the first range of vibration dampening compliance under the first range of journal bearing operating conditions. The first seal includes a first seal material. The first seal material is operable to contribute to providing the first range of vibration dampening compliance under the first range of journal bearing operating conditions. The second seal includes a second seal shape. The second seal shape is operable to contribute to providing the second range of vibration dampening compliance under the second range of journal bearing operating conditions. The second seal includes a second seal material. The second seal material is different from the first seal material. The second seal material is operable to contribute to providing the second range of vibration dampening compliance under the second range of journal bearing operating conditions.

Further disclosed is a method of forming a seal system for controlling vibration dampening in a journal bearing system. The method includes forming a plurality of seals including a first seal and a second seal. Forming the first seal includes configuring the first seal to provide a first range of vibration dampening compliance under a first range of journal bearing operating conditions. Forming the second seal includes configuring the second seal to provide a second range of vibration dampening compliance under a second range of journal bearing operating conditions. The first range of vibration dampening compliance is different from the second range of vibration dampening compliance.

In addition to any one or more of the features described herein, the first range of journal bearing operating conditions is different from the second range of journal bearing operating conditions. The first seal includes a first seal shape. The first seal shape is operable to contribute to providing the first range of vibration dampening compliance under the first range of journal bearing operating conditions. The first seal includes a first seal material. The first seal material is operable to contribute to providing the first range of vibration dampening compliance under the first range of journal bearing operating conditions. The second seal includes a second seal shape. The second seal shape is operable to contribute to providing the second range of vibration dampening compliance under the second range of journal bearing operating conditions. The second seal includes a second seal material. The second seal material is different from the first seal material. The second seal material is operable to contribute to providing the second range of vibration dampening compliance under the second range of journal bearing operating conditions.

In addition to any one or more of the features described herein, the method further includes determining a seal element design including aspects of the plurality of seals. Determining the seal element design includes determining the first seal shape, the first seal material, the second seal shape and the second seal material. Determining the first seal shape and the first seal material includes inserting the first range of vibration dampening compliance and the first range of journal bearing operating conditions into a computer-aided-design (CAD) system having optimization functionality. Determining the second seal shape and the second seal material includes inserting the second range of vibration dampening compliance and the second range of journal bearing operating conditions into the CAD system having optimization functionality.

Embodiments are also directed to seal systems, methods, computer program products and computer systems having the features and functionality of the seal systems, methods and computer systems described above.

### BRIEF DESCRIPTION OF THE DRAWINGS

The following descriptions should not be considered limiting in any way. With reference to the accompanying drawings, like elements are numbered alike:
FIG. 1 is a cross-sectional illustration of an air cycle machine showing a bearing system operable to implement aspects of the disclosure;
FIG. 2 is an enlarged schematic cross-sectional illustration of the bearing system of FIG. 1 showing a seal element system;
FIG. 3 is an enlarged schematic cross-sectional illustration of seal elements of the seal element system of FIG. 2.
FIG. 4A depicts non-limiting examples of sealing element shapes in accordance with embodiments;
FIG. 4B depicts non-limiting examples of sealing element shapes in accordance with embodiments;
FIG. 5A depicts a table illustrating dampening compliance associated with various sealing element shapes/materials and journal bearing operating conditions in accordance with embodiments;
FIG. 5B depicts a table illustrating dampening compliance associated with various sealing element shapes/materials and journal bearing operating conditions in accordance with embodiments;
FIG. 6 depicts a graph illustrating deflection percentages associated with a seal element shape over various load forces in accordance with embodiments;
FIG. 7 depicts a simplified flow diagram illustrating an operating methodology of a bearing system in accordance with embodiments;
FIG. 8 depicts a simplified diagram illustrating relationships between operating conditions in accordance with embodiments;
FIG. 9 depicts a computer-aided-design (CAD) system operable to implement design operations associated with embodiments; and
FIG. 10 depicts a simplified block diagram illustrating a programmable computing system operable to implementing embodiments.

### DETAILED DESCRIPTION

A detailed description of one or more embodiments of the disclosed apparatus and method are presented herein by way of exemplification and not limitation with reference to the Figures.

Bearings are machine elements that constrain relative motion and reduce friction between moving parts to only the desired motion. Bearings can be used to support a variety of rotating artifacts such as natural gas turbines, compressors, turboexpanders, pumps, motors and the like. In sliding contact bearings, the surface of the shaft slides over the surface of the bush. In order to reduce frictional resistance, reduce wear, and carry away generated heat, fluid film bearing have been developed to include a layer of fluid (i.e., lubricant). Broadly divided into hydrostatic and hydrodynamic designs, fluid film bearings make use of a fluid medium between the bearing faces, where shear within the fluid acts as the contacting motion "surface."

Hydrostatic bearings use an externally pressurized medium (usually air, water or most commonly oil), to separate the bearing faces. They can provide low friction, high damping (or dampening) and high load capacity. Instead of an external pressure source, hydrodynamic bearings use the pressure generated by relative speeds between the journal and rotating bearing to pressurize their fluid medium in a wedge shaped groove between the faces. Oil is commonly used as well, but a form of air bearings called a foil bearing may be used as well. Viscous effects pull gas into the bearing gap, pressurizing a foil journal lining. Once at operational RPM, the foil bearing is a fully contained, non-contact solution.

Rotating machinery assemblies are traditionally supported radially using a set of two hydrodynamic foil journal bearings. These journal bearings can be held in place with a vibration dampening assembly that includes an arrangement of seal elements operable to provide additional damping (or dampening) for the bearings. However, the seal elements of vibration dampening assemblies are exposed to a variety of air cycle machine operating conditions (e.g., force loads, extreme operating temperatures, and the like) that can invoke failure modes of the seal elements, including, for example, the seal elements experiencing permanent setting and loss of squeeze, which can result in bearing failure. It is thus desirable to provide a vibration dampening assembly with seal elements operable to provide improved control of vibration dampening in bearing systems across a variety of environmental operating conditions.

Exemplary embodiments provide vibration dampening assemblies operable to provide improved control of vibration dampening in bearing systems. In embodiments, the vibration damping operations performed by the disclosed configurations of seal elements dissipate vibration energy by absorbing or changing vibration energy, thereby reducing the amount of energy transmitted through the configurations of seal elements. Embodiments disclosed herein incorporate seal elements configured and arranged to include various combinations of seal element shapes, seal element materials, and seal element quantities to maximize the vibration dampening at required squeeze levels across a range of operating conditions (e.g., temperatures and journal bearing loads). This effect extends the life of the hydrodynamic foil bearing and end use product while also increases the allowable operating temperature range of the bearing. In embodiments, the disclosed dampening assembly includes both silicone and fluorocarbon seal elements for maximizing performance of the dampening assembly across the operating temperature ranges of various rotational machinery, and further extending the life of the dampening assembly. The disclosed dampening assembly can be used in various types of bearing systems for rotational machinery.

In some embodiments, a computer-aided-design (CAD) system is provided and used to assist with implementing the various tradeoffs that occur when tuning the varying shapes, materials, and quantities of seal elements to generate a seal element design that maximizes the vibration dampening at required squeeze across a range of operating conditions (e.g., temperatures and journal bearing loads). In some embodiments, the CAD system includes simulation functionality, optimization functionality, and/or machine learning (ML) and/or artificial intelligence (AI) functionality. The simulation functionality can be used to electronically simulate proposed seal element designs of the vibration dampening systems. The optimization functionality can include an optimization problem solver operable to optimize seal-element-related variables such as seal element dimensions, seal element materials, seal element shape, seal element retention channel dimensions, seal element retention channel spacing, and spacings between the bearing housing and the journal bearing. The optimization problem solver can optimize any combination of the above variables to satisfy a range of vibration dampening compliance requirements and/or a full range of journal bearing operating conditions of the journal-bearing-system-under-design (JBSUD). The ML/AI functionality can assist with performing the simulation functionality and/or the optimization functionality by creating a model of the JBSUD (including the seal element design) and using the model to assist with implementing simulations and optimization functionality.

In some embodiments, the CAD system is coupled to a seal element repository configured to store electronic information about dimensions, shapes, materials, placements, and general performance characteristics (e.g., vibration dampening compliance under different operating conditions) of various seal elements. In some embodiments, the seal element repository is used to define constraints applied to the seal element design by the CAD system. In some embodiments, the data/information from the seal element repository can be used to train models of the ML/AI functionality.

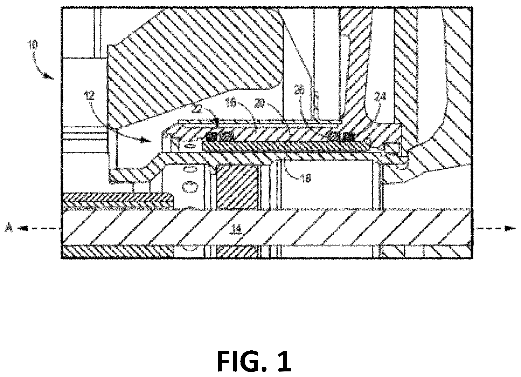

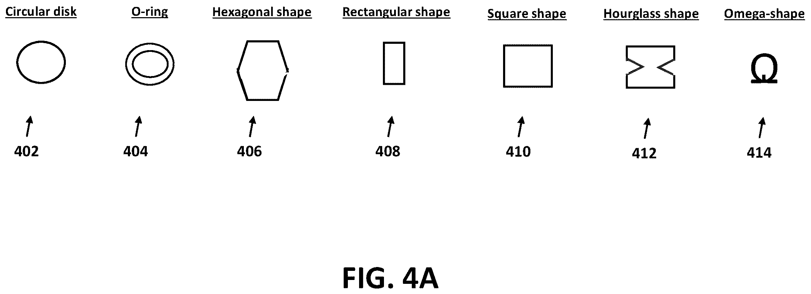

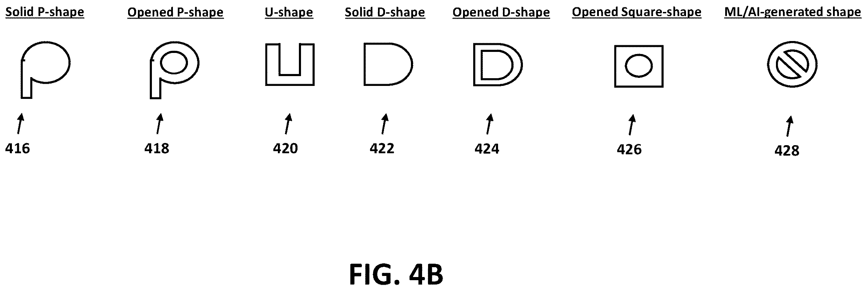

FIG. 1 is a cross-sectional illustration of a portion of air cycle machine (ACM) 10, which can be incorporated into an environmental control system (ECS) of an aircraft. ACM 10 includes bearing system 12 for rotationally supporting tie rod 14 about rotational axis A. Bearing system 12 can include bearing housing 16, bearing shaft 18, and journal bearing 20 disposed between bearing housing 16 and bearing shaft 18. Journal bearing 20 can be a hydrodynamic fluid bearing in one or more embodiments. Bearing system 12 can further include hybrid vibration dampening assembly 22 for dampening vibrations within bearing system 12. Vibration dampening assembly 22 can include a first set of seal elements 24 and a second set of seal elements 26, each being configured to include a predetermined shape in accordance with embodiments. In some embodiments, each set of the seal elements 24, 26 can be implemented as one or more seal elements. In some embodiments, one or more sets of the seal elements 24, 26 can be provided. Example shapes of the seal elements 24, 26 are shown in FIGS. 4A and 4B and are described in greater details subsequently herein. Seal elements 24 and 26 can be disposed within bearing housing 16 and circumferentially about journal bearing 20.

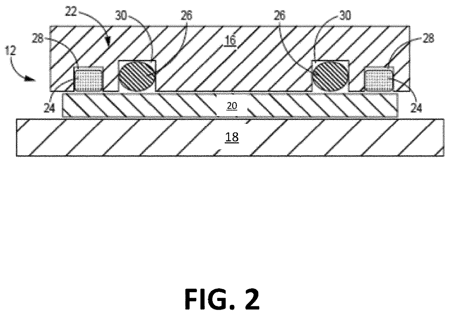

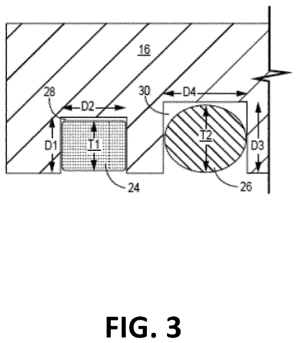

FIG. 2 is a schematic, enlarged cross-sectional illustration showing vibration dampening assembly 22 in greater detail. FIG. 3 is a schematic cross-sectional illustration of a portion of bearing housing 16 with individual seal elements 24 and 26. FIGS. 2 and 3 are discussed together.

The set of seal elements 24 can be disposed within first retention channels 28 formed within bearing housing 16. The set of seal elements 26 can be disposed within second retention channels 30. As shown in FIG. 2, each seal element 24 can be situated adjacent/collocated with a seal element 26 within bearing housing 16, and can further be arranged such that seal elements 26 sit inboard of/are axially externally bounded by seal elements 24. In some embodiments, seal elements 24 can sit inboard of seal elements 26, or seal elements 24 and 26 can be axially alternatingly disposed along bearing housing 16.

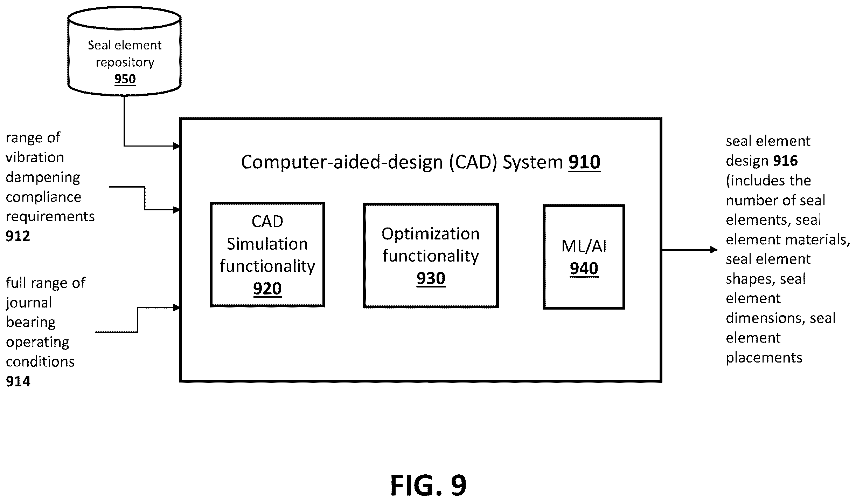

In some embodiments, seal elements 24 can be formed from silicone and be rated for a range of journal bearing operating conditions (e.g., the full range of journal bearing operating conditions 914 shown in FIG. 9) that include temperatures ranging from about -80°F to about 450°F (e.g., about -62.2°C to about 232.2°C). Likewise, seal elements 26 can, in some embodiments, be a fluorocarbon elastomer, and more specifically, a relatively high fluoride-containing elastomer, such as a product known commercially as Kalrez^{®} or other similar perfluoroelastomer (FFKM) material. FFKM's can be rated for a range of journal bearing operating conditions (e.g., the full range of journal bearing operating conditions 914 shown in FIG. 9) that include temperatures ranging from about -65°F (e.g., about -53.9°C) to well above about 450°F. Bearing system 12 can be exposed to temperatures as low as about -65°F (e.g., the cold soak temperature) and exceeding about 400°F, especially if positioned near a motor, compressor outlet, or other source of high temperatures. Silicone performs well (i.e., maintain squeeze and vibration dampening capabilities) at cold soak temperatures, but can suffer from thermal compression set (i.e., the retention of squeeze shape when no force is exerted) with continued exposure to temperatures above about 400°F, thus reducing vibration dampening capabilities of seal elements 24. Conversely, high fluoride-containing elastomers perform well above about 400°F, but become stiff and lose squeeze starting at about 0°F (e.g., about -17.8°C). As such, the use of both silicone seal elements 24 and fluorocarbon seal elements 26 allow vibration dampening assembly 22 to be configured and arranged such that a full range of vibration dampening compliance requirements (e.g., the range of vibration dampening compliance requirements 912) can be met across the range of temperatures (e.g., -65°F to 450°F) bearing system 12 is exposed to during the operation of ACM 10. In embodiments, the combination of materials used for the seal elements 24, 26 can be part of a seal element design 916 (shown in FIG. 9) that includes the number of seal elements, the seal element shapes, the seal element dimensions, and the seal element placements. Additional details of the seal element design 916 are provided subsequently herein.

In some embodiments, in order to optimize performance of vibration dampening assembly 22, each seal element 26 can be configured with reduced squeeze compared to seal elements 24, as well as fluorocarbon seal elements that might be used as the sole seal elements in a vibration dampening assembly for a bearing system. Squeeze can be expressed as the extent of deformation expressed as a percentage of cross-sectional thickness of a seal element (e.g., seal element 26). The cross-sectional thicknesses T1 and T2 are labeled for each of seal element 24 and seal element 26, respectively, in FIG. 3. Seal element 26 squeeze can be reduced from about 5% to about 15% for fluorocarbon seal elements to about 3% to about 10%. The reduced squeeze primarily addresses vibration dampening performance of seal elements 26 when temperatures reach 0°F and seal elements 26 become firm, by preventing stiffened seal elements 26 from inhibiting the rotation of journal bearing 20. Additionally, seal elements 26 help to extend the operating life of seal elements 24 and vibration dampening assembly 22 by bearing a portion of the load on vibration dampening assembly 22, especially at temperatures exceeding about 400°F. The reduced load on seal elements 24 slows the rate of compression set of seal elements 24 as compared to other traditional bearing systems using solely silicone seal elements. Accordingly, vibration dampening assembly 22 is distinguishable over those of traditional bearing systems which typically have only one pair of seal elements, formed from either silicone, or a reduced fluoride fluoroeslatomer (FKM), such as Viton^{™}, with upper temperature limits of only about 300°F (about 148.9°C).

First retention channels 28 can have a cross-sectional area defined by dimensions D1 and D2, and second retention channels 30 can have a cross-sectional area defined by dimensions D3 and D3. Either of dimensions D1 and D2 can be different from either of dimensions D3 and D4, and in an exemplary embodiment, at least one of D3 and D4 can be greater than either of D1 or D2, respectively. Bearing housing 16 can include four retention channels-two first retention channels 28 and two second retention channels 30-as shown, but alternative embodiments can include fewer than four retention channels or more than four retention channels. This can be true if such alternative embodiment includes less than four total seal elements (e.g., three seal elements) or more than four total seal elements (e.g., five or six seal elements). The cross-sectional thickness T2 of seal element 26 can be greater than the cross-sectional thickness T1 of seal element 24, which can be a result of the difference in material and/or design of the respective seal elements, and/or as a result of the reduced squeeze of seal element 26. Further, although seal elements 24 and 26 are shown with two different cross-sectional geometries (rectangular versus rounded, respectively), any number of the seal elements 24 and 26 can be implemented in any suitable combination of seal elements shapes (e.g., the seal elements shapes shown in FIGS. 4A and 4B).

FIGS. 4A and 4B depict non-limiting examples of sealing element shapes that can be utilized in accordance with embodiments. More specifically, the sealing elements 24, 26 (best shown in FIGS. 2 and 3) can, in accordance with aspects of embodiments, be implemented using any combination of the seal element shapes shown in FIGS. 4A and 4B. FIG. 4A depicts a circular disk shape 402, an O-ring shape 404, a hexagonal shape 406, a rectangular (or fin) shape 408, a square shape 410, an hourglass shape 412, and an Omega-shape 414. FIG. 4B depicts a solid P-shape 416, an opened P-shape 418, a U-shape 420, a solid D-shape 422, an opened D-shape 424, the opened square-shape 426, and an ML/Al-generated shape 428. In some embodiments, a computer-aided-design (CAD) system 910 includes ML/AI functionality 940 that can be utilized to generate (e.g., using generative ML/AI functionality) or predict (e.g., using predictive ML/AI functionality) the ML/Al-generated shape 428, which is described in greater detail subsequently herein. Non-limiting examples of the seal elements shown in FIGS. 4A and 4B (excluding the ML/Al-generated shape 428) are commercially available from the Parker Hannifin Corporation and are described in a publication titled "ParFab™ Design Guide Extruded and Hot Vulcanized Gaskets," © 2014 Parker Hannifin Corporation.

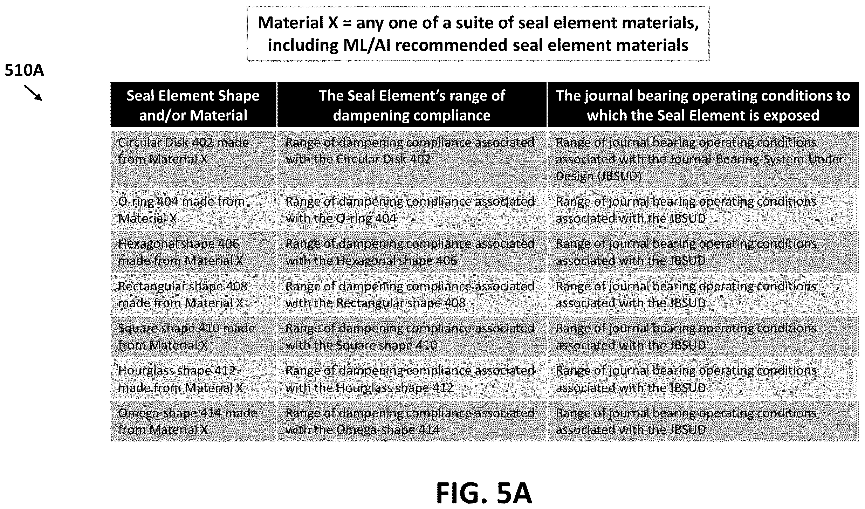

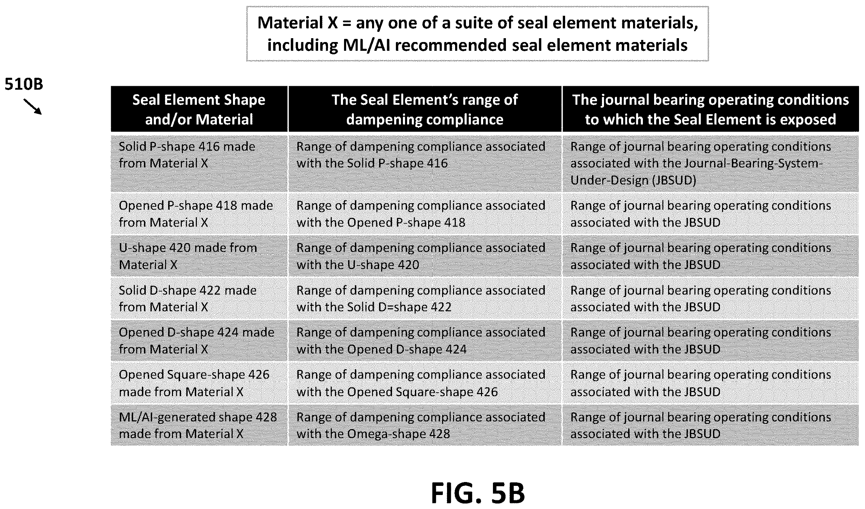

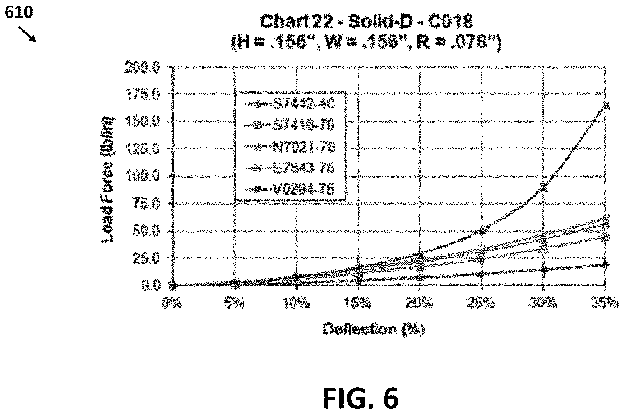

FIGS. 5A, 5B, and 6 illustrate various examples of how seal element characteristics can be organized, where the seal element characteristics (e.g., vibration dampening compliance, etc.) result from the shape and/or material of the seal element, as well as the journal bearing operating conditions to which the seal element is exposed. Table 510A shown in FIG. 5A depicts how seal element characteristics of the circular disk shape 402, the O-ring shape 404, the hexagonal shape 406, the rectangular (or fin) shape 408, the square shape 410, the hourglass shape 412, and the Omega-shape 414 can be organized. Table 510B shown in FIG. 5B depicts how seal element characteristics of the solid P-shape 416, the opened P-shape 418, the U-shape 420, the solid D-shape 422, the opened D-shape 424, the opened square-shape 426, and the ML/AI-generated shape 428 can be organized. In embodiments, the information that populates tables 510A, 510B can be drawn from a corpus of information about performance characteristics of various seal element shapes and/or materials under various environmental operating conditions. A non-limiting example of the corpus of information about performance characteristics of various seal element shapes and/or materials under various environmental operating conditions includes but it not limited to the previously-described publication titled "ParFab^{™} Design Guide Extruded and Hot Vulcanized Gaskets," ^{©} 2014 Parker Hannifin Corporation. A graph 610 shown in FIG. 6 depicts a non-limiting example of deflection percentages per operational load (load force in lbs/inch) for a solid D-shaped seal element (e.g., solid D-shape 422 shown in FIG. 4B), which is an example of the corpus of information about performance characteristics of various seal element shapes and/or materials under various environmental operating conditions available in the previously-described publication titled "ParFab^{™} Design Guide Extruded and Hot Vulcanized Gaskets," ^{©} 2014 Parker Hannifin Corporation. In embodiments, the tables 510A, 510B and the graph 610, along with other information about performance characteristics of various seal element shapes and/or materials can be stored in a seal element repository 950 (shown in FIG. 9 and described subsequently herein).

As described in greater detail subsequently herein, embodiments can use any number and/or combination of the seal element shapes depicted in FIGS. 4A and 4B, as well as materials and/or dimensions described herein in connection with FIGS. 2 and 3. The varying seal element shapes, materials, dimensions and the like are selected in accordance with embodiments to provide a desired seal element design 916 (shown in FIG. 9) operable to meet a range of vibration dampening compliance requirements 912 (shown in FIG. 9) and operate in a full range of journal bearing operating conditions 914 (shown in FIG. 9) without invoking failure modes of the individual seal elements of the seal element design 916. The characteristics of the seal elements in the seal element design 916 can be tuned in accordance with embodiments to vary the squeeze of each seal element in the seal element design 916 to meet application needs of the associated ACM (e.g., ACM 10 shown in FIG. 1). For example, the characteristics of seal elements in the seal element design 916 can be tuned to, for example, maximize vibration damping through a range of temperatures and operational loads. A seal element design 916 in accordance with embodiments provides technical benefits, including maintaining vibration dampening at required squeeze across a range of temperatures and operational loads while eliminating undesired rotordynamics effects. These technical benefits can extend bearing and product life, avoid failure modes of the seal elements, and increase the operating temperature range of bearing system 12 (shown in FIG. 1).

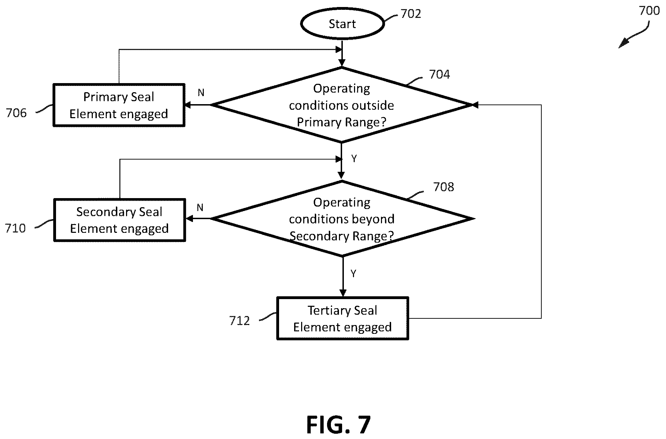

FIG. 7 depicts a simplified flow diagram illustrating an operating methodology 700 of a bearing system 12 (shown in FIG. 1) in accordance with embodiments. The primary seal element referenced at block 706, the secondary seal element referenced in block 710, and the tertiary seal element referenced at block 712 can be part of the vibration dampening assembly 22 (shown in FIG. 1), and more specifically, can be part of the seal element design 916 (shown in FIG. 9) generated by the CAD system 910 (shown in FIG. 9). Although three (3) seal element options are addressed by the methodology 700, embodiments can be extended to any number of seal elements each having a corresponding range of operating conditions aligned with non-failure-modes of the corresponding seal element.

The methodology 700 begins at block 702 then moves to decision block 704, which is responsive to various operating conditions of the ACM (e.g., ACM 10 shown in FIG. 1). Decision block 704 is operable to determine whether or not the current/actual ACM operating conditions are outside a primary range of the ACM operating conditions. In accordance with embodiments, characteristics of the primary seal element have been generated (e.g., using the CAD system 910 shown in FIG. 9) to not go into failure modes (e.g., experience compression set) when exposed to the primary range of ACM operating conditions. The ACM operating conditions evaluated at decision block 704 can be assessed using any suitable structure of the ACM (e.g., ACM 10 show in FIG. 1). In some embodiments, the bearing housing 16 (e.g., the material of the bearing housing 16), the dimensions/material of the primary seal element (e.g., seal element 26 shown in FIG. 3), the secondary seal element (e.g., seal element 24 shown in FIG. 3), the dimensions/material of a primary bearing housing channel (e.g., the second retention channels 30 shown in FIG. 3) in which the primary seal element is positioned, and the dimensions/material of a secondary bearing housing channel (e.g., the first retention channels 28 shown in FIG. 3) in which the second seal element is positioned can be configured and arranged to respond differently under a primary range of ACM operating conditions in comparison to a secondary range of ACM operating conditions. For example, at block 702, which is prior to initiating operations of the ACM, the primary seal element and the secondary seal element can occupy initial or steady state positions, where the primary seal element is engaged with (or contacts) the primary bearing housing channel 30 and the journal bearing 20, and where the secondary seal element 28 is engaged with (or contacts) the secondary bearing housing channel but is not engaged with (or in contact with) and the journal bearing 20. In this initial or steady state position, the primary seal mechanically couples between the bearing housing 16 and the journal bearing 20, thereby enabling the primary seal element to dampen vibrations attempting to pass through the primary seal element. In this initial or steady state position, the secondary seal does not mechanically couple between the bearing housing 16 and the journal bearing, thereby the secondary seal element does not dampen vibrations attempting to pass through the primary seal element. In embodiments, the engagement/disengagement relationship between the secondary seal element and the tertiary seal element is similar to the above-described engagement/disengagement relationship between the primary seal element and the secondary seal element.

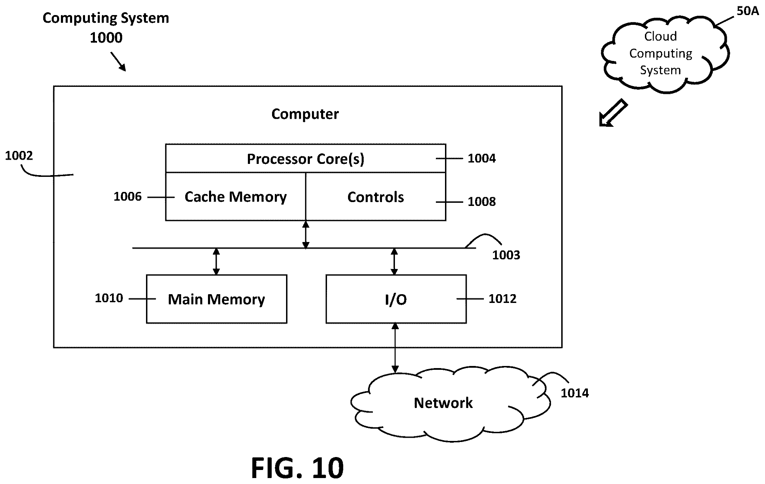

In some embodiments, the ACM operating conditions evaluated at decision block 704 can be assessed using, for example, a network of sensors (not shown separately from the ACM 10) and actuators (also not shown separately from the ACM 10). The network of sensors can be operable to provide sensor outputs to, for example, the computing system 1000 (shown in FIG. 10) for evaluation and action. For example, temperature sensors can be used to determine an operating temperature of the ACM, and pressure sensors can be used to determine the various load forces (measured in lbs/in) applied through the bearing system 12 to the vibration dampening assembly 22. Responsive to outputs from the sensor network, the computing system 1000 can control the actuators to selectively engage and/or disengage the primary seal element, the secondary seal element and/or the tertiary seal element. In embodiments, the actuators can be any suitable structure, such as a spring-loaded end, electrically-controlled actuator, mechanical lever, and the like.

Any suitable mechanism can be used to movably position the primary seal element, the secondary seal element and/or the tertiary seal element within the bearing housing 16, whereby the suitable mechanism can be used to engage or disengage the primary seal element, the secondary seal element and/or the tertiary seal element. When engaged, the primary seal element mechanically couples the bearing housing 16 to the journal bearing 20, thereby enabling the primary seal element to dampen vibrations attempting to pass through the primary seal element. When disengaged, the primary seal element does not mechanically couple the bearing housing 16 and the journal bearing 20, thereby not enabling the primary seal element to dampen vibrations attempting to pass through the primary seal element. When disengaged, the secondary seal element does not mechanically couple the bearing housing 16 and the journal bearing 20, thereby not substantially enabling the secondary seal element to dampen vibrations attempting to pass through the secondary seal element. When engaged, the secondary seal element mechanically couples the bearing housing 16 and the journal bearing 20, thereby enabling the secondary seal element to dampen vibrations attempting to pass through the primary seal element. When disengaged, the tertiary seal element does not mechanically couple between the bearing housing 16 and the journal bearing 20, thereby not substantially enabling the tertiary seal element to dampen vibrations attempting to pass through the tertiary seal element. When engaged, the tertiary seal element mechanically couples the bearing housing 16 and the journal bearing 20, thereby enabling the tertiary seal element to dampen vibrations attempting to pass through the primary seal element.

If the answer to the inquiry at decision block 704 is no, the methodology 700 determines that the primary seal element should be engaged, or should be allowed to remain engaged if it has already been engaged. For example, the seal element 26 (shown in FIGS. 2 and 3) can operate as the primary seal element, which is positioned within the second retention channels 30 (shown in FIGS. 2 and 3); and the seal element 24 (shown in FIGS. 2 and 3) can operate as the secondary seal element, which is positioned within the first retention channel 28. Using vibration dampening as an example, the seal element 26 is engaged in that it is positioned within the second retention channel 30 such that the seal element 26 is mechanically coupled to the second retention channel 30 and mechanically coupled to the journal bearing 20 such that vibrations can pass through the housing 16 to the seal element 26 and be dampened by the seal element 26. The seal element 24 is not engaged in that it is positioned within the first retention channel 28 such that the seal element 24 is mechanically coupled to the first retention channel 208 and not mechanically coupled to the journal bearing 20 such that vibrations substantially do not pass through the housing 16 to the seal element 24 to be dampened by the seal element 24. The methodology 700 engages the primary seal element at block 706 then returns to the input to decision block 704.

If the answer to the inquiry at decision block 704 is yes, the methodology 700 determines that the operating conditions of the ACM have moved outside the primary range, which means that the operating conditions of the ACM have moved outside a range where failure modes of the primary seal element are avoided. Based on the yes response to the inquiry at decision block 704, the methodology 700 moves to decision block 708 to, in effect, determine when and/or how to engage additional seal elements (secondary seal element and/or tertiary seal element). At decision block 708, the methodology 700 again evaluates various operating conditions of the ACM (e.g., ACM 10 shown in FIG. 1) to determine whether or not the ACM operating conditions are now outside or beyond a secondary range of the ACM operating conditions. In accordance with embodiments, characteristics of the secondary seal element have been generated (e.g., using the CAD system 910 shown in FIG. 9) to operate in the secondary range of ACM operating conditions without going into a failure mode associated with the secondary seal element. The operating conditions evaluated at decision block 708 can be assessed using any of suitable technique, including, for example, the techniques used at decision block 704 and previously described herein.

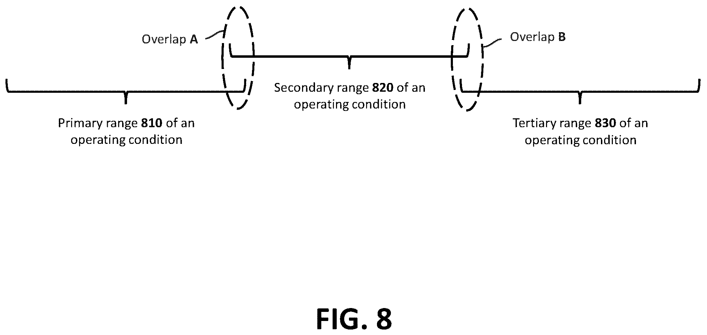

If the answer to the inquiry at decision block 708 is no, the methodology 700 determines that the secondary seal element should be engaged. For example, the seal element 24 (shown in FIGS. 2 and 3) can operate as the secondary seal element, which is positioned within the first retention channels 28 (shown in FIGS. 2 and 3). The methodology 700 engages the secondary seal element at block 710 then returns to the input to decision block 708. In embodiments, at block 710, the primary seal element and the secondary seal element are engaged and sharing vibration dampening duties. In embodiments, the allocation of vibration dampening responsibilities between the primary seal element and the secondary seal element can be based on a difference between the stiffness level of the primary seal element compared to the stiffness level of the secondary seal element. In other words, the primary seal element and the secondary seal element can act as a series of springs operable to carry a portion of the vibration dampening load when the springs are engaged. In some embodiments, the stiffness level of the seal element 24 is double or triple the stiffness level of the seal element 26. As the primary range of ACM operating conditions approaches the secondary range of ACM operating conditions, the primary seal element 26 will have compressed enough to engage the secondary seal element 24 with the journal bearing 20, and the overall load force applied to the ACM would now be allocated to both the primary seal element 26 and the secondary seal element 24 with the stiffer seal element 24 carrying the bulk of the overall load force. FIG. 8 illustration aspects of the inquiry at decision block 708 by depicting a diagram illustrating a transition (Overlap A) from the ACM operating in a primary range 810 of an operating condition to operating in a secondary range 820 of the operating condition. In Overlap A, the load force applied to the ACM is shared by the primary seal element 26 and the secondary seal element 24. The methodology 700 engages the secondary seal element at block 710 then returns to the input to decision block 708.

If the answer to the inquiry at decision block 708 is yes, the methodology 700 determines that the operating conditions of the ACM have moved outside or beyond the secondary range, which means that the operating conditions of the ACM have moved outside a range where failure modes of the secondary seal element are avoided. Based on the yes response to the inquiry at decision block 708, the methodology 700 moves to block 712 to engage the tertiary seal element. The relationship between the secondary seal element and the tertiary seal element mirrors or tracks the previously-described relationship between the primary seal element and the secondary seal element. FIG. 8 illustration further aspects of the inquiry at decision block 708 by depicting a diagram illustrating a transition (Overlap B) from the ACM operating in a secondary range 820 of an operating condition to operating in a tertiary range 830 of the operating condition. In Overlap B, the load force applied to the ACM is shared by the primary seal element 26, the secondary seal element 24 and the tertiary seal element in any combination. The methodology 700 engages the tertiary seal element at block 712 then returns to an input to decision block 704.

FIG. 9 depicts a non-limiting example of the CAD system 910 that can be used to implement aspects of the invention. The CAD system 910 includes CAD simulation functionality 920, optimization functionality 930, and ML/AI functionality 940, configured and arranged as shown. The CAD system 910 is coupled to a seal element repository 950 configured to store electronic information about dimensions, shapes, materials, placements, and general performance characteristics (e.g., vibration dampening compliance under different operating conditions) of various seal elements, including specifically seal elements deployed in an ACM (e.g., ACM 10 shown in FIG. 1).

In embodiments of the disclosure, a seal element design 916, which includes the number of seal elements, seal element materials, seal elements shapes, seal element dimensions, and seal element placement locations, is generated by the CAD system 910 responsive to a range of vibration dampening compliance requirements 912 and a full range of journal bearing operating conditions 914 associated with (or required by) a particular journal-bearing-system-under-design (JBSUD) and/or an ACM-under-design. The range of vibration dampening compliance requirements 912 (e.g., deflection percentages and the like) and the range of journal bearing operating conditions 914 (e.g., a range of operating temperatures and/or load forces) associated with (or required by) a particular JBSUD can be set up as an optimization problem and solved using an optimization problem solver of the optimization functionality 930. In some embodiments of the disclosure, the optimization problem solver works in tandem with the CAD simulation functionality 920 to determine or tune one or more seal element designs 916 that provide or meet the range of vibration dampening compliance requirements 912 operating under the range of journal bearing operating conditions 914 associated with (or required by) a particular JBSUD.

In embodiments of the disclosure, the overall CAD system 910, and specifically the CAD simulation functionality 920, includes CAD functionality. CAD is the use of computer-based software to aid in design processes. CAD software is used by engineers and designers to create two-dimensional (2D) drawings or three-dimensional (3D) product-under-development (PUD) models. A purpose of CAD is to optimize and streamline the designer's workflow, increase productivity, improve the quality and level of detail in the design, improve documentation communications, and often contribute toward a manufacturing design database. CAD software outputs can be in the form of electronic files, which are used for manufacturing and/or fabrication processes. CAD can be used in tandem with digitized manufacturing/fabrication processes known as computer-aided manufacturing (CAM) processes. CAD/CAM software can be used to design a variety of products such as electronic circuit boards in computers and other devices. The CAD simulation functionality 920 allows virtual experiments to be performed on a JBSUD instead of a physical prototype of the JBSUD.

The range of vibration dampening compliance requirements 912 and the range of journal bearing operating conditions 914 associated with (or required by) the JBSUD can be set up as variables of an optimization problem that can be solved using an optimization problem solver of the optimization functionality 930. An optimization problem is one in which some function is either maximized or minimized relative to a given set of alternatives. An optimization problem can be organized under three general components, namely, an objective function, decision variables, and constraints. The objective function reflects one or more quantities to be either maximized or minimized. The decision variables, which can be represented as vectors, represent aspects of the problem that the entity formulating the optimization problem has control over. This can include both variables the entity can directly choose, as well as variables that the entity can indirectly influence by the choice of other decision variables. Every decision variable in the optimization problem formulation should either directly influence the objective function, or should influence another decision variable that affects the objective function. Constraints represent any kind of limitation on the values that the decision variables can take. The most intuitive types of constraints are those which directly and obviously limit the choices that can be made. For example, an integrated circuit design has a thermal budget constraint that limits the amount of heat that can be generated when the integrated circuit performs its various tasks.

In some embodiments, constraints are developed using historical data about seal elements functioning in a journal bearing system are stored in the seal element repository 950. The seal element repository 950 accumulate events and activities from various journal bearing systems and seal elements that occur over time and provide the same to the various functionalities of the CAD system 910, including the ML/AI functionality 940, that support CAD operations performed at the CAD system 910. In embodiments, the seal element repository 950 can be implemented as a searchable database operable to organize and store data/information of activities and/or events of the historical data about seal elements functioning in a journal bearing system in segments or regions of the repository 950. The repository 950 can be any form of database, including but not limited to, relational SQL databases, noSQL unstructured databases, unstructured data lakes, time-series databases, and the like. In some embodiments, the repository 950 can include features and functionality of a relational database operably controlled by the computing system 1000 (shown in FIG. 10). **In** general, a database is a means of storing information in such a way that information can be retrieved from it, and a relational database presents information in tables with rows and columns. A table is referred to as a relational table in the sense that it is a collection of objects of the same type (rows). Data in a table can be related according to common keys or concepts, and the ability to retrieve related data from a table is the basis for the term relational database. A database management system (DBMS) of the computing system 1000 controls the way data in the seal element repository 950 are stored, maintained, and retrieved. A database management system of the computing system 1000 performs the tasks of determining the way data and other information are stored, maintained, and retrieved from the repository 950.

In embodiments of the disclosure, the CAD system 910, and more specifically, the ML/AI functionality 940, is operable to utilize cognitive algorithms to perform the various data analysis and simulation/prediction operations described herein. In embodiments of the disclosure, a cognitive algorithm refers to a variety of algorithm types (e.g., ML/Al 940) that generate and apply computerized models to simulate the human thought process in complex situations where the answers might be ambiguous and uncertain. A conventional cognitive algorithm includes self-learning technologies that use data mining, pattern recognition, natural language processing (NLP), and other related technologies to generate the mathematical models that make decisions (e.g., classifications, predictions, and the like) that, in effect, mimic human intelligence. In embodiments of the disclosure, the modifier "cognitive" as applied to "outputs" and/or "output actions" refers to the outputs, actions, and the like generated by cognitive algorithms to represent the result of the analysis operations performed by cognitive algorithms. A non-limiting example of a cognitive output action is predicting a material of a seal element that will satisfy a range of vibration dampening compliance requirements under a range of journal bearing operating conditions. Another non-limiting example of a cognitive output action is predicting a shape of a seal element that will satisfy a range of vibration dampening compliance requirements under a range of journal bearing operating conditions. Still another non-limiting example of a cognitive output action is predicting a material and a shape of a seal element that will satisfy a range of vibration dampening compliance requirements under a range of journal bearing operating conditions.

FIG. 10 illustrates an example of a computing system 1000 that can be used to implement the computer-based components of the neural network system described herein. The computing system 1000 includes an exemplary computing device ("computer") 1002 configured for performing various aspects of the content-based semantic monitoring operations described herein in accordance aspects of the invention. In addition to computer 1002, exemplary computing system 1000 includes network 1014, which connects computer 1002 to additional systems (not depicted) and can include one or more wide area networks (WANs) and/or local area networks (LANs) such as the Internet, intranet(s), and/or wireless communication network(s). Computer 1002 and additional system are in communication via network 1014, e.g., to communicate data between them.

Exemplary computer 1002 includes processor cores 1004, main memory ("memory") 1010, and input/output component(s) 1012, which are in communication via bus 1003. Processor cores 1004 includes cache memory ("cache") 1006 and controls 1008, which include branch prediction structures and associated search, hit, detect and update logic, which will be described in more detail below. Cache 1006 can include multiple cache levels (not depicted) that are on or off-chip from processor 1004. Memory 1010 can include various data stored therein, e.g., instructions, software, routines, etc., which, e.g., can be transferred to/from cache 1006 by controls 1008 for execution by processor 1004. Input/output component(s) 1012 can include one or more components that facilitate local and/or remote input/output operations to/from computer 1002, such as a display, keyboard, modem, network adapter, etc. (not depicted).

A cloud computing system 50A is in wired or wireless electronic communication with the computing system 1000. The cloud computing system 50A can supplement, support or replace some or all of the functionality (in any combination) of the computing system 1000. Additionally, some or all of the functionality of the computing system 1000 can be implemented as a node of the cloud computing system 50A.

For the sake of brevity, conventional techniques related to making and using the disclosed embodiments may or may not be described in detail herein. In particular, various aspects of computing systems and specific computer programs to implement the various technical features described herein are well known. Accordingly, in the interest of brevity, many conventional implementation details are only mentioned briefly or are omitted entirely without providing the well-known system and/or process details.

For convenience, some of the technical operations described herein are conveyed using informal expressions. For example, a processor that has data stored in its cache memory can be described as the processor "knowing" the data. Similarly, a user sending a load-data command to a processor can be described as the user "telling" the processor to load data. It is understood that any such informal expressions in this detailed description should be read to cover, and a person skilled in the relevant art would understand such informal expressions to cover, the formal and technical description represented by the informal expression.

Many of the functional units of the systems described in this specification have been labeled as modules. Embodiments of the invention apply to a wide variety of module implementations. For example, a module can be implemented as a hardware circuit including custom VLSI circuits or gate arrays, off-the-shelf semiconductors such as logic chips, transistors, or other discrete components. A module can also be implemented in programmable hardware devices such as field programmable gate arrays, programmable array logic, programmable logic devices or the like. Modules can also be implemented in software for execution by various types of processors. An identified module of executable code can, for instance, include one or more physical or logical blocks of computer instructions which can, for instance, be organized as an object, procedure, or function. Nevertheless, the executables of an identified module need not be physically located together, but can include disparate instructions stored in different locations which, when joined logically together, function as the module and achieve the stated purpose for the module.

The various components/modules/models of the systems illustrated herein are depicted separately for ease of illustration and explanation. In embodiments of the invention, the functions performed by the various components/modules/models can be distributed differently than shown without departing from the scope of the various embodiments of the invention describe herein unless it is specifically stated otherwise.

Aspects of the invention can be embodied as a system, a method, and/or a computer program product at any possible technical detail level of integration. The computer program product may include a computer readable storage medium (or media) having computer readable program instructions thereon for causing a processor to carry out aspects of the present invention.

The computer readable storage medium can be a tangible device that can retain and store instructions for use by an instruction execution device. The computer readable storage medium may be, for example, but is not limited to, an electronic storage device, a magnetic storage device, an optical storage device, an electromagnetic storage device, a semiconductor storage device, or any suitable combination of the foregoing. A non-exhaustive list of more specific examples of the computer readable storage medium includes the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, and any suitable combination of the foregoing. A computer readable storage medium, as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire.

Computer readable program instructions described herein can be downloaded to respective computing/processing devices from a computer readable storage medium or to an external computer or external storage device via a network, for example, the Internet, a local area network, a wide area network and/or a wireless network. The network may comprise copper transmission cables, optical transmission fibers, wireless transmission, routers, firewalls, switches, gateway computers and/or edge servers. A network adapter card or network interface in each computing/processing device receives computer readable program instructions from the network and forwards the computer readable program instructions for storage in a computer readable storage medium within the respective computing/processing device.

The terms "about," "substantially," "substantial," "approximately," and equivalents thereof are intended to include the degree of error associated with measurement of the particular quantity based upon the equipment available at the time of filing the application. For example, "about" can include a range of ± 8% or 5%, or 2% of a given value.

The terminology used herein is for the purpose of describing particular embodiments only and is not intended to be limiting of the present invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. A seal system for controlling vibration dampening in a journal bearing system, the seal system comprising:
a plurality of seals comprising a first seal (24) and a second seal (26);
wherein the first seal (24) is operable to provide a first range of vibration dampening compliance under a first range of journal bearing operating conditions;
wherein the second seal (26) is operable to provide a second range of vibration dampening compliance under a second range of journal bearing operating conditions; and
wherein the first range of vibration dampening compliance is different from the second range of vibration dampening compliance.

2. The seal system of claim 1, wherein the first range of journal bearing operating conditions is different from the second range of journal bearing operating conditions.

3. The seal system of claim 2, wherein the first seal (24) comprises a first seal shape.

4. The seal system of claim 3, wherein the first seal shape is operable to contribute to providing the first range of vibration dampening compliance under the first range of journal bearing operating conditions.

5. The seal system of claim 4, wherein the first seal (24) comprises a first seal material.

6. The seal system of claim 5, wherein the first seal material is operable to contribute to providing the first range of vibration dampening compliance under the first range of journal bearing operating conditions.

7. The seal system of claim 6, wherein the second seal (26) comprises a second seal shape.

8. The seal system of claim 7, wherein the second seal shape is operable to contribute to providing the second range of vibration dampening compliance under the second range of journal bearing operating conditions.

9. The seal system of claim 8, wherein:
the second seal (26) comprise a second seal material; and
the second seal material is different from the first seal material.

10. The seal system of claim 9, wherein the second seal material is operable to contribute to providing the second range of vibration dampening compliance under the second range of journal bearing operating conditions, and optionally wherein the first seal shape is selected from a group consisting of a circular shape, a square shape, a rectangular shape, a hexagonal shape, an O-ring shape, and an hourglass shape, and optionally wherein the second seal shape is selected from a group consisting of a circular shape, a square shape, a rectangular shape, a hexagonal shape, an O-ring shape, and an hourglass shape, and optionally wherein:
the plurality of seals further comprises a third seal;
the third seal is operable to provide a third range of vibration dampening compliance under a third range of journal bearing operating conditions;
the third range of vibration dampening compliance is different from the first range of vibration dampening compliance:
the third range of vibration dampening compliance is different from the second range of vibration dampening compliance;
the third range of journal bearing operating conditions is different from the first range of journal bearing operating conditions;
the third range of journal bearing operating conditions is different from the second range of journal bearing operating conditions;
the third seal comprises a third seal shape;
the third seal shape is operable to contribute to providing the third range of vibration dampening compliance under the third range of journal bearing operating conditions;
the third seal comprise a third seal material;
the third seal material is operable to contribute to providing the third range of vibration dampening compliance under the third range of journal bearing operating conditions;
the third seal shape is different from the first seal shape;
the third seal shape is different from the second seal shape;
the third seal material is different from the first seal material;
the third seal material is different from the second seal material; and
the third seal shape is selected from a group consisting of a circular shape, a square shape, a rectangular shape, a hexagonal shape, an O-ring shape, and an hourglass shape.

11. A seal system for controlling vibration dampening in a journal bearing system, the seal system comprising:
a plurality of seals comprising a first seal (24) and a second seal (26);
wherein the first seal (24) and the second seal (26) are between a first component and a second component of the journal bearing system;
wherein the first seal (24) is operable to provide a first range of vibration dampening compliance under a first range of journal bearing operating conditions;
wherein the second seal (26) is operable to provide a second range of vibration dampening compliance under a second range of journal bearing operating conditions; and
wherein the first range of vibration dampening compliance is different from the second range of vibration dampening compliance.

12. The seal system of claim **11,** wherein the first range of journal bearing operating conditions is different from the second range of journal bearing operating conditions; and optionally wherein:
the first component comprises a housing of the journal bearing system; and
the second component comprises a journal bearing of the journal bearing system; and optionally wherein:
the first seal (24) comprises a first seal shape;
the first seal shape is operable to contribute to providing the first range of vibration dampening compliance under the first range of journal bearing operating conditions;
the first seal (24) comprises a first seal material;
the first seal material is operable to contribute to providing the first range of vibration dampening compliance under the first range of journal bearing operating conditions;
the second seal (26) comprises a second seal shape;
the second seal shape is operable to contribute to providing the second range of vibration dampening compliance under the second range of journal bearing operating conditions;
the second seal (26) comprise a second seal material;
the second seal material is different from the first seal material; and
the second seal material is operable to contribute to providing the second range of vibration dampening compliance under the second range of journal bearing operating conditions.

13. A method of forming a seal system for controlling vibration dampening in a journal bearing system, the method comprising:
forming a plurality of seals comprising a first seal (24) and a second seal (26);
wherein forming the first seal (24) comprises configuring the first seal (24) to provide a first range of vibration dampening compliance under a first range of journal bearing operating conditions;
wherein forming the second seal (26) comprises configuring the second seal (26) to provide a second range of vibration dampening compliance under a second range of journal bearing operating conditions; and
wherein the first range of vibration dampening compliance is different from the second range of vibration dampening compliance.

14. The method of claim 13, wherein:
the first range of journal bearing operating conditions is different from the second range of journal bearing operating conditions;
the first seal (24) comprises a first seal shape;
the first seal shape is operable to contribute to providing the first range of vibration dampening compliance under the first range of journal bearing operating conditions;
the first seal (24) comprises a first seal material;
the first seal material is operable to contribute to providing the first range of vibration dampening compliance under the first range of journal bearing operating conditions;
the second seal (26) comprises a second seal shape;
the second seal shape is operable to contribute to providing the second range of vibration dampening compliance under the second range of journal bearing operating conditions;
the second seal (26) comprise a second seal material;
the second seal material is different from the first seal material; and
the second seal material is operable to contribute to providing the second range of vibration dampening compliance under the second range of journal bearing operating conditions.

15. The method of claim 13 or 14, further comprising:
determining a seal element design comprising aspects of the plurality of seals;
wherein determining the seal element design comprises determining the first seal shape, the first seal material, the second seal shape and the second seal material;
wherein determining the first seal shape and the first seal material comprises inserting the first range of vibration dampening compliance and the first range of journal bearing operating conditions into a computer-aided-design (CAD) system having optimization functionality; and
wherein determining the second seal shape and the second seal material comprises inserting the second range of vibration dampening compliance and the second range of journal bearing operating conditions into the CAD system having optimization functionality.
